(19)

Europäisches
Patentamt
European
Patent Office
Office européen
des brevets

(11) **EP 4 318 964 A1**

(12) **EUROPEAN PATENT APPLICATION**
published in accordance with Art. 153(4) EPC

(43) Date of publication:
**07.02.2024 Bulletin 2024/06**

(21) Application number: **21932740.0**

(22) Date of filing: **10.12.2021**

(51) International Patent Classification (IPC):
**H04B 7/0417** (2017.01)

(52) Cooperative Patent Classification (CPC):
**H04B 7/0417; H04B 7/0456; H04L 1/00**

(86) International application number:
**PCT/CN2021/137198**

(87) International publication number:
**WO 2022/199133 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 CN 202110321069**

(71) Applicant: **ZTE Corporation
Shenzhen, Guangdong 518057 (CN)**

(72) Inventors:
• **LIU, Lei
Shenzhen, Guangdong 518057 (CN)**

• **WU, Hao
Shenzhen, Guangdong 518057 (CN)**
• **LI, Lun
Shenzhen, Guangdong 518057 (CN)**
• **XIAO, Huahua
Shenzhen, Guangdong 518057 (CN)**
• **LU, Zhaohua
Shenzhen, Guangdong 518057 (CN)**

(74) Representative: **Zoli, Filippo
Brunacci & Partners S.r.l.
Via Pietro Giardini, 625
41125 Modena (IT)**

(54) **METHOD FOR TRANSMITTING COMPRESSED CODEBOOK, AND METHOD FOR OBTAINING CHANNEL STATE INFORMATION MATRIX**

(57)     A method for transmitting a compressed codebook, and a method for obtaining a channel state information matrix. The method comprises: obtaining a channel state information matrix to be fed back (202); inputting the channel state information matrix into an encoding network structure to obtain a first compressed codebook corresponding to the channel state information matrix, wherein the number of elements of the first compressed codebook is less than the number of elements of the channel state information matrix (204); and transmitting the first compressed codebook to a base station (206).

Acquire a channel state information (CSI) matrix for subsequent feedback — S202

↓

Input the CSI matrix into an encoder network structure to generate a first compressed codebook corresponding to the CSI matrix, where the number of elements of the first compressed codebook is less than that of the CSI matrix — S204

↓

Transmit the first compressed codebook to a base station — S206

FIG. 2

EP 4 318 964 A1

Description

CROSS-REFERENCE TO RELATED APPLICATION

This application is filed on the basis of the Chinese patent application No. 202110321069.4 filed March 25, 2021, and claims priority of the Chinese patent application, the entire contents of which are incorporated herein by reference.

TECHNICAL FIELD

The present disclosure relates to the field of communication, and in particular to a method for transmitting a compressed codebook, and a method for acquiring a channel state information (CSI) matrix.

BACKGROUND

From long-term evolution (LTE) to the New Radio (NR) Access Technique, the multi-antenna technique has always been one of the important technologies in communication standards. With the continuous improvement of communication standards, how to obtain Channel State Information (CSI) more accurately is also the key to improve the performance of the multi-antenna technique. In the current multi-antenna system, the downlink CSI fed back by the User Equipment (UE) to the Base Station (BS, such as gNB, eNB, or Node B) is affected by the number of antennas. The overhead of the downlink CSI feedback increases with the increase in the number of antennas. Thus, the accuracy of the base station recovering the downlink CSI according to the codebook information fed back by the UE also reaches a bottleneck. Therefore, Artificial Intelligence (AI), as a powerful technique, has also been introduced into the wireless communication system to break through the technical bottleneck in the traditional communication system. For example, AI is applied to the feedback of the CSI in the multi-antenna system. However, room remains for ensuring both the performance and overhead of feedback of the CSI in the existing technology.

SUMMARY

Provided are a method for transmitting a compressed codebook, a method for acquiring a channel state information (CSI) matrix in some embodiments of the present disclosure, in order to at least address the failure in balancing the performance and overhead of feedback of the CSI in the related technology.

According to an aspect of the present disclosure, an embodiment provides a method for transmitting a compressed codebook, the method includes, acquiring a channel state information (CSI) matrix for subsequent feedback; inputting the CSI matrix into an encoder network structure to generate a first compressed codebook corresponding to the CSI matrix, wherein a number of elements of the first compressed codebook is less than that of the CSI matrix; and transmitting the first compressed codebook to a base station.

According to another aspect of the present disclosure, an embodiment provides a method for acquiring a CSI matrix, the method includes, receiving a first compressed codebook or a second compressed codebook transmitted by a terminal device, where the first compressed codebook is generated by inputting a CSI matrix into an encoder network structure by the terminal device, the second compressed codebook is generated by preset processing to the first compressed codebook, where the number of elements of the first compressed codebook is less than that of the CSI matrix; and inputting the first compressed codebook or the second compressed codebook into a decoder network structure corresponding to the encoder network structure to recover the CSI matrix.

According to yet another embodiment of the present disclosure, an embodiment provides a device for transmitting a compressed codebook, which includes, an acquisition module, which is configured to acquire a channel state information (CSI) matrix for subsequent feedback; a first processing module, which is configured to input the CSI matrix into an encoder network structure to generate a first compressed codebook corresponding to the CSI matrix, where a number of elements of the first compressed codebook is less than that of the CSI matrix; and a transmission module, which is configured to transmit the first compressed codebook to a base station.

According to yet another embodiment of the present disclosure, an embodiment provides a device for acquiring a channel state information (CSI) matrix, which includes, a receiving module, which is configured to receive a first compressed codebook or a second compressed codebook transmitted by a terminal device, where the first compressed codebook is generated by inputting a CSI matrix into an encoder network structure by the terminal device, and the second compressed codebook is generated by preset processing to the first compressed codebook, and the number of elements of the first compressed codebook is less than that of the CSI matrix; and a second processing module, which is configured to input the first compressed codebook or the second compressed codebook into a decoder network structure corresponding to the encoder network structure to recover the CSI matrix.

According to yet another embodiment of the present disclosure, an embodiment provides a computer-readable storage medium storing a computer program, which when executed by a processor, causes the processor to carry out any one of the methods described above.

According to yet another aspect of the present disclosure, an embodiment provides an electronic apparatus, which includes a memory, a processor, and a computer program stored in the memory and executable on the processor which, when executed by the processor, causes the processor to carry out any one of the methods as described above.

## BRIEF DESCRIPTION OF DRAWINGS

The drawings are intended to provide a further understanding of the technical scheme of the present disclosure, and form a part of the description, and they are intended to illustrate the technical scheme of the present disclosure in conjunction with the embodiments of the present disclosure, but are not intended to improperly limit the technical scheme of the present disclosure. In the drawings:

FIG. 1 depicts a schematic diagram showing the hardware structure of a computer terminal device for implementing a method for transmitting a compressed codebook according to an embodiment of the present disclosure;

FIG. 2 depicts a flowchart showing a method for transmitting a compressed codebook according to an embodiment of the present disclosure;

FIG. 3 depicts a flowchart showing a method for acquiring a CSI matrix according to an embodiment of the present disclosure;

FIG. 4 depicts a schematic diagram #1 showing a procedure of feedback of a CSI matrix according to an embodiment of the present disclosure;

FIG. 5 depicts a schematic diagram #2 showing a procedure of feedback of a CSI matrix according to an embodiment of the present disclosure;

FIG. 6 depicts a schematic diagram showing a device for transmitting a compressed codebook according to an embodiment of the present disclosure; and

FIG. 7 depicts a schematic diagram showing a device for acquiring a CSI matrix according to an embodiment of the present disclosure.

## DETAILED DESCRIPTION

Embodiments of the present disclosure will be described below in conjunction with the drawings in order to facilitate the understanding of the solution of the present disclosure by those having ordinary skills in the art. It is apparent that, the described embodiments are some but not all of the embodiments of present disclosure. Based on the embodiments described herein, all other embodiments that can be achieved by those having ordinary skill in the art without creative effort shall fall within the scope of protection of the present disclosure.
It should be noted that the terms "first" and "second", if used in the description, the claims and the drawings are intended to distinguish similar objects, and do not necessarily imply any specific order or sequence. It should be understood that the data used in this way can be interchanged under appropriate circumstances, so that the embodiments described here can be implemented in an order other than those illustrated or described here. In addition, the terms "including" or "having" and any variations thereof are non-exclusive. For example, a process, method, system, product or device that includes a series of steps or units is not necessarily limited to those steps or units that are clearly stated, but may include other steps or units that are not clearly stated or inherent to these processes, methods, products or devices.

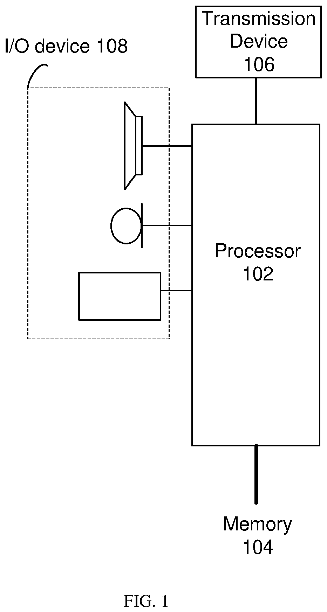

The method embodiment set forth in an embodiment of the present disclosure may be implemented in a computer terminal device or a similar computing device. FIG. 1 depicts a schematic diagram showing the hardware structure of a computer terminal device for carrying out the method for transmitting a compressed codebook according to an embodiment of the present disclosure, by way of an example in which the method is implemented in the computer terminal device. As shown in FIG. 1, the computer terminal device may include one or more (only one is shown in FIG. 1) processors 102 (the processors 102 may include but are not limited to processing devices such as a microprocessor MCU or a programmable logic device like FPGA) and a memory 104 for storing data. In an embodiment, the computer terminal device may also include a transmission device 106 for communication, and an input/output device 108. It can be understood by those skilled in the art that the structure shown in FIG. 1 is only schematic, and the above-mentioned computer terminal device is not limited thereto. For example, the computer terminal device may also include more or fewer components than those shown in FIG. 1, or have a different configuration with equivalent functions to those shown in FIG. 1 or more functions than those shown in FIG. 1.

The memory 104 can be configured to store computer programs, for example, software programs and modules of application software, such as the computer programs corresponding to the method for transmitting a compressed codebook in an embodiment of the present disclosure. The processor 102 executes various functional applications and data processing by running the computer programs stored in the memory 104, such that, the above-described method is carried out. The memory 104 may include high-speed random-access memory, and may also include non-volatile memory, such as one or more magnetic storage devices, flash memory, or other non-volatile solid-state memory. In some implementations, the memory 104 may further include memory remotely arranged with respect to the processor 102, and the remote memory may be connected to the computer terminal device through a network. Examples of the above networks include, but are not limited to, the Internet, intranet, local area network, mobile communication network, and combinations thereof.

The transmission device 106 is configured to receive or transmit data via a network. Specific examples of the above-mentioned networks may include wireless networks provided by communication providers of computer terminal devices. In one example, the transmission device 106 includes a Network Interface Controller (NIC), which may be connected with other network devices through a base station so as to communicate with the Internet. In an implementation, the transmission device 106 is a Radio Frequency (RF) module, which is configured to wirelessly communicate with the Internet.

In the existing technology of the Ethernet, the 50G, and 100G PHY have forward error correction (FEC) function, and when FEC decoding is performed at the receiving end, if errors are found, only a part of 64B/66B blocks involved in FEC coded words has error labels. This may result in a transmission of a 66bit block containing errors to the Ethernet MAC layer, thus leading to a degradation in the performance of the Ethernet.

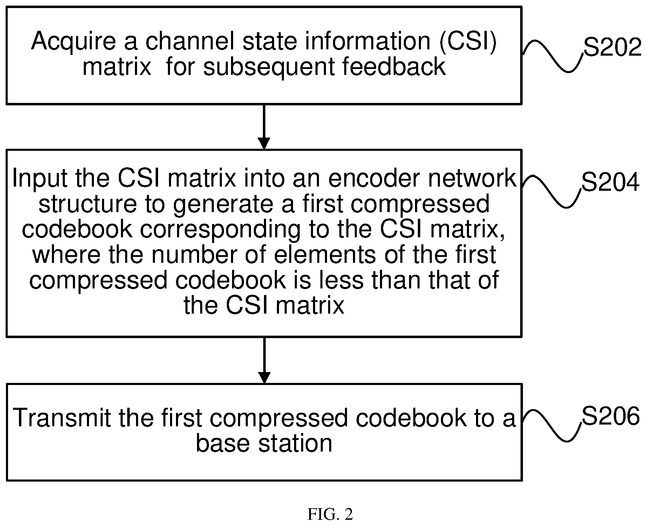

In order to at least alleviate the above technical problem, an embodiment of the present disclosure provides a method for transmitting a compressed codebook. As shown in FIG. 2, the method includes the following operations.

At S202, a channel state information (CSI) matrix for subsequent feedback is acquired.

At S204, the CSI matrix is input into an encoder network structure to generate a first compressed codebook corresponding to the CSI matrix, where the number of elements of the first compressed codebook is less than that of the CSI matrix.

At S206, the first compressed codebook is transmitted to a base station.

The present disclosure provides a method for transmitting a compressed codebook which includes, acquiring a CSI matrix for subsequent feedback; inputting the CSI matrix into an encoder network structure to generate a first compressed codebook corresponding to the CSI matrix, where the number of elements of the first compressed codebook is less than that of the CSI matrix; and transmitting the first compressed codebook to a base station. That is, when the CSI matrix for subsequent feedback is obtained, the CSI matrix is input into the encoder network structure to obtain a first compressed codebook corresponding to the CSI matrix, and the first compressed codebook is transmitted to the base station. By means of the method as described above, at least the failure in balancing the performance and overhead of the CSI feedback in the related art can be addressed, and then the performance of channel state information feedback can be guaranteed at a low cost.

In an embodiment, the method further includes, successively quantizing, encoding and modulating the first compressed codebook to generate a second compressed codebook; and transmitting the second compressed codebook to the base station.

In an alternative embodiment, before inputting the CSI matrix into the encoder network structure to generate the first compressed codebook corresponding to the CSI matrix, the method further includes, acquiring the currently employed encoder network structure from a plurality of encoder network structures according to at least one of, a channel type indication that is indicative of the currently employed encoder network structure, a component type of the compressed codebook, or the number of components of the compressed codebook.

It should be noted that at the UE side, the encoder network structure can be an encoder in an AutoEncoder (AE). The encoder network structure can be a Fully-Connected Network (FCN) structure, in which the network layers in the fully-connected network structure are all fully-connected layers. Alternatively, the encoder network structure can also be a Convolutional Neural Network (CNN) structure, in which the network layers in the convolutional neural network structure are all convolution layers. Alternatively, the encoder network structure can be a Recurrent Neural Network (RNN) structure, in which the network layers in the recurrent neural network structure are all fully connected layers. Alternatively, the encoder network structure can be a Residual Network (ResNet) structure, in which the network layer of the ResNet structure is a residual block structure. Alternatively, the encoder network structure can be a hybrid network structure, in which the network layers in the hybrid network structure can be a combination of a fully-connected layer, a convolution layer, a pooling layer, a recurrent layer, batch normalization layer, residual network block and the like.

In an embodiment, the currently employed encoder network structure can be acquired from a plurality of encoder network structures according to at least one of, a channel type indication that is indicative of the currently employed encoder network structure, a component type of the compressed codebook, or the number of components of the compressed codebook.

In an embodiment, the network parameters of the encoder network structure include at least one of, a network layer type, a network layer number, a network layer mapping, a network layer weight, a network layer bias, a network layer weight normalization coefficient, a network layer activation function, or a compression ratio, where the compression ratio is indicative of the ratio of the number of elements of the first compressed codebook to the number of elements of the CSI matrix.

It should be note that the network parameters of the encoder network structure include at least one of, a network layer type, a network layer number, a network layer mapping, a network layer weight, a network layer bias, a network layer weight normalization coefficient, a network layer activation function, or a compression ratio.

The encoder network structure includes L1 network layers, and the i-th network layer can be a fully connected layer, a convolution layer, a pooling layer, a recurrent layer, a batch normalization layer, or a residual network block composed of several convolution layers.

In particular, the i-th network layer contains $N_{e,i}$ nodes (the network weight corresponding to this layer is $W_{e,i}$, and if a convolution layer is included, the network convolution kernel weight of this layer can also be $K_{e,i}$), 0-1 network layer bias $b_{e,i}$, activation function $A_{e,i}$ (i=1, ..., L1). In an embodiment, the activation function can be a ReLU function, as shown in equation (1):

$$y = max(x, 0) \quad (1).$$

In another embodiment, the activation function can also be a Leaky ReLU function, as shown in equation (2):

$$y = \begin{cases} x & x \geq 0 \\ ax & x < 0 \end{cases} \quad a > 0 \quad (2).$$

In yet another embodiment, the activation function can also be an ELU function, as shown in equation (3):

$$y = \begin{cases} x & x > 0 \\ a(e^x - 1) & x \leq 0 \end{cases} \quad a > 0 \quad (3).$$

In yet another embodiment, the activation function can also be the Sigmoid function, as shown in equation (4):

$$y = \frac{1}{1 + e^{-x}} \quad (4).$$

The activation function can also be a Tanh function, as shown in equation (5):

$$y = \frac{1 - e^{-2x}}{1 + e^{-2x}} \quad (5).$$

However, the activation function is not limited to the functions listed above. In the L1th network layer of the encoder network structure, the network output is a compressed codebook including P elements. In an embodiment, the number of elements in the compressed codebook is different from the number of elements M of the input CSI matrix. Typically, the number of elements in the compressed codebook is less than the number of elements corresponding to the CSI matrix, that is, P < M. The ratio of the number of elements in the compressed codebook to the number of elements in the CSI matrix is called the Compression Ratio (CR), as shown in equation (6).

$$CR = P/M \quad (6).$$

For example, the CSI matrix contains 2048 elements, while the compressed codebook contains only 32 elements, so the compression ratio is 32/2048=1/64. The parameters described in this embodiment all belong to the network parameters of this encoder network, and the feedback overhead of the UE side can be further controlled by changing the compression ratio.

In an embodiment, before inputting the CSI matrix into the encoder network structure to generate the first compressed codebook corresponding to the CSI matrix, the method further includes, receiving a plurality sets of network parameters of encoder network structures sent by the base station through high-layer signaling or physical layer signaling; acquiring a set of network parameters from the plurality sets of network parameters of the encoder network structures according to a channel condition, where the channel condition includes at least one of, a channel scenario, or a channel feature.

It should be noted that, in the present disclosure, a plurality sets of network parameters of encoder network structures sent by the base station are received through high-level signaling or physical layer signaling. Then a set of network parameters is acquired from the plurality sets of network parameters of encoder network structures according to the channel condition that can be a channel scenario, or a channel feature.

In an embodiment, after a set of network parameters is acquired from the plurality sets of network parameters of encoder network structures according to the channel conditions, the method further includes transmitting the obtained set of network parameters to the base station, to instruct the base station to process the first compressed codebook through the decoder network structure corresponding to the obtained set of network parameters to obtain the CSI matrix.

It should be noted that after a set of network parameters is acquired from the plurality sets of network parameters of encoder network structures according to the channel conditions, the obtained set of network parameters is transmitted to the base station. The base station obtains the corresponding decoder network structure according to the set of network parameters, and processes the first compressed codebook through the obtained decoder network structure to obtain the CSI matrix.

In an embodiment, the encoder network structure includes at least one of, a fully connected network structure, a convolutional neural network structure, a recurrent neural network structure, or a residual network structure.

It shall be noted that, the encoder network structure can be, a fully connected network structure, a convolution neural network structure, a recurrent neural network structure, or a residual network structure. The encoder network structure can also be a hybrid network structure.

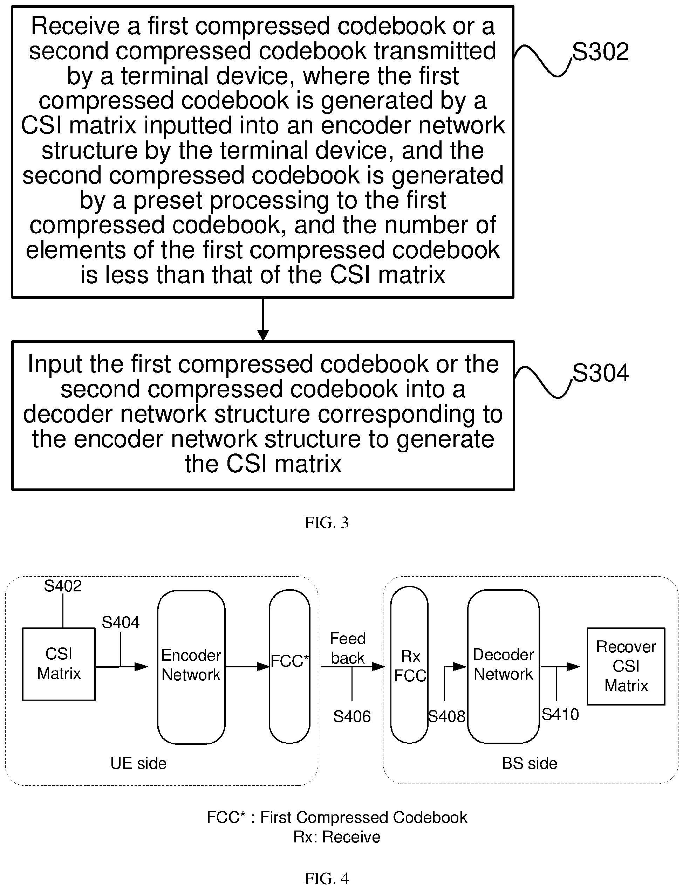

FIG. 3 depicts a flowchart showing a method for acquiring a CSI matrix according to an embodiment of the present disclosure. The method includes the following operations.

At S302, a first compressed codebook or a second compressed codebook transmitted by a terminal device is received, where the first compressed codebook is generated by inputting a CSI matrix into an encoder network structure by the terminal device, and the second compressed codebook is generated by a preset processing to the first compressed codebook, and the number of elements of the first compressed codebook is less than that of the CSI matrix.

At S304, the first compressed codebook or the second compressed codebook is input into a decoder network structure corresponding to the encoder network structure to generate the CSI matrix.

An embodiment of the present disclosure provides a method for acquiring a CSI matrix, the method includes, receiving a first compressed codebook or a second compressed codebook transmitted by a terminal device, where the first compressed codebook is generated by inputting a CSI matrix into an encoder network structure by the terminal device, the second compressed codebook is generated by a preset processing to the first compressed codebook, and the number of elements of the first compressed codebook is less than that of the CSI matrix; and inputting the first compressed codebook or the second compressed codebook into a decoder network structure corresponding to the encoder network structure to obtain the CSI matrix. That is, when the first compressed codebook or the second compressed codebook transmitted by the terminal device is received, the first compressed codebook or the second compressed codebook is input into the decoder network structure corresponding to the encoder network structure to obtain the CSI matrix. By means of the method as described above, at least the failure in balancing the performance and overhead of the CSI feedback in the related art can be addressed, and then the performance of channel state information feedback can be guaranteed at a low cost.

It should be noted that the terminal device is the User Equipment (UE) side.

In an embodiment, the method further includes, sequentially quantizing, encoding and modulating the first compressed codebook to generate a second compressed codebook.

It should be noted that once that first compressed codebook is generated, the first compressed codebook is successively quantized, encoded and modulated, to generate a second compressed codebook that is subsequently sent by the terminal device to the base station.

In an embodiment, the method further includes, successively demodulating, decoding and dequantizing the second compressed codebook, in response to a reception of the second compressed codebook transmitted by the terminal device, to obtain the first compressed codebook.

In an embodiment, the network parameters of the decoder network structure include at least one of, a network layer type, a network layer number, a network layer mapping, a network layer weight, a network layer bias, a network layer weight normalization coefficient, a network layer activation function, or a compression ratio, where the compression ratio is indicative of the ratio of the number of elements of the first compressed codebook to the number of elements of the CSI matrix.

It should be noted that the network parameters of the decoder network structure can be, a network layer type, a network layer number, a network layer mapping, a network layer weight, a network layer bias, a network layer weight normalization coefficient, a network layer activation function, or a compression ratio.

The decoder network structure includes L2 network layers. Since the network structure at the base station side is complex, the number of layers of the decoder network L2 is greater than that of the layers of the encoder network, that is $L2 \geq L1$. The i-th network layer can be a fully connected layer, a convolution layer, a pooling layer, a recurrent layer, a batch normalization layer or a residual network block composed of several convolution layers. In particular, the i-th network layer contains $N_{d,i}$ nodes (the network weight corresponding to this layer is $W_{d,i}$, and if a convolution layer is included, the network convolution kernel weight of this layer can also be $K_{d,i}$), 0-1 network layer bias $b_{d,i}$, and activation function $A_{d,i}$ (i=1, ..., L2). The activation function can be ReLU function, Leaky ReLU function, ELU function, Sigmoid function or Tanh function, but the activation function is not limited thereto. In the $L2^{th}$ network layer of the decoder network structure, the network output is a CSI matrix including M elements. The parameters described in this embodiment are all network parameters of the decoder network.

In one embodiment, the method further includes, transmitting a plurality of sets of network parameters of encoder network structures to the terminal device through high-layer signaling or physical layer signaling, to instruct the terminal device to acquire a set of network parameters from the plurality sets of network parameters of encoder network structures according to a channel condition, where the channel condition includes at least one of, a channel scenario, or a channel feature.

It should be noted that, in the present disclosure, a plurality sets of network parameters of encoder network structures are sent to the terminal device through high-level signaling or physical layer signaling. Then a set of network parameters is acquired by the terminal device from the plurality sets of network parameters of encoder network structures according to the channel condition which can be a channel scenario, or a channel feature.

In an embodiment, the method further includes, receiving the acquired set of network parameters sent by the terminal device; and processing the first compressed codebook or the second compressed codebook according to a decoder network structure corresponding to the set of network parameters to acquire the CSI matrix.

It should be noted that the terminal device inputs the CSI matrix into the encoder network, the input CSI matrix is processed according to the structural parameters in the encoder network, then a compressed codebook is output and fed back to the base station side. In an embodiment, the second compressed codebook that is generated by successively quantizing, encoding and modulating the compressed codebook can also be transmitted to the base station. The quantization can be uniform quantization or non-uniform quantization. The base station side receives the compressed codebook fed back by the terminal device and inputs the compressed codebook into the decoder network. The input compressed codebook is processed according to the structural parameters in the decoder network. Then the recovered CSI matrix is output. In an embodiment, the base station side receives the second compressed codebook fed back by the terminal device, successively dequantizes, decodes and demodulates the second compressed codebook, and inputs the processed second compressed codebook into the decoder network. The input second compressed codebook is processed according to the structural parameters in the decoder network. Then the recovered CSI matrix is output.

In an embodiment, the decoder network structure includes at least one of, a fully connected network structure, a convolutional neural network structure, a recurrent neural network structure, or a residual network structure.

It should be noted that at the base station side, the decoder network structure can be a decoder in an AutoEncoder (AE). The decoder network structure can be an FCN structure, in which the network layers are all fully-connected layers. Alternatively, the decoder network structure can also be a CNN structure, in which the network layers are all convolution layers. Alternatively, the decoder network structure can be a RNN structure, in which the network layers are all fully connected layers. Alternatively, the decoder network structure can be a ResNet structure, in which the network layer is a residual block structure. Alternatively, the decoder network structure can be a hybrid network structure, in which the network layers can be a combination of a fully-connected layer, a convolution layer, a pooling layer, a recurrent layer, a residual network block, and the like.

It should be noted that in order to obtain the compressed codebook from the input CSI matrix at the UE side, and receive the compressed codebook and recover the compressed codebook to the CSI matrix at the base station side, it is necessary to establish an encoder network at the UE side and a decoder network at the base station side. The parameters of the encoder network and the decoder network can be trained off-line, or can be obtained by off-line training and fine-tuning the parameters in the online stage. A plurality of sets of network parameters jointly trained by the terminal device and the base station are stored, where each set of parameters of encoder network has corresponding parameters of decoder network. The base station can configure $X$ ($X \geq 1$) sets of parameters of encoder network according to high-level signaling, and send the $X$ sets of parameters of encoder network to the UE through high-level signaling or physical layer signaling. The UE selects one suitable set of parameters of encoder network according to at least one factor such as the practical channel scenario and channel features, and then feeds back the index of the selected network parameters to the base station through physical layer or high-level signaling, and processes the input CSI matrix with the selected parameters of encoder network to generate a compressed codebook. The base station side obtains the corresponding trained parameters of decoder network according to the index of parameters of encoder network fed back by the UE, and processes the compressed codebook received by the base station to obtain the CSI matrix.

The method for transmitting a compressed codebook is further illustrated with the following two schematic diagrams.

FIG. 4 depicts a schematic diagram #1 showing a procedure of feedback of a CSI matrix according to an embodiment of the present disclosure. The procedure includes the following operations.

At S402, a CSI matrix for subsequent feedback is acquired.

At S404, the CSI matrix is input into an encoder network structure to generate a first compressed codebook corresponding to the CSI matrix, where the number of elements of the first compressed codebook is less than that of the CSI matrix.

At S406, the first compressed codebook is transmitted to a base station.

At S408, the base station inputs the first compressed codebook into a decoder network structure corresponding to the encoder network structure.

At S410, the CSI matrix is recovered through processing by the decoder network structure.

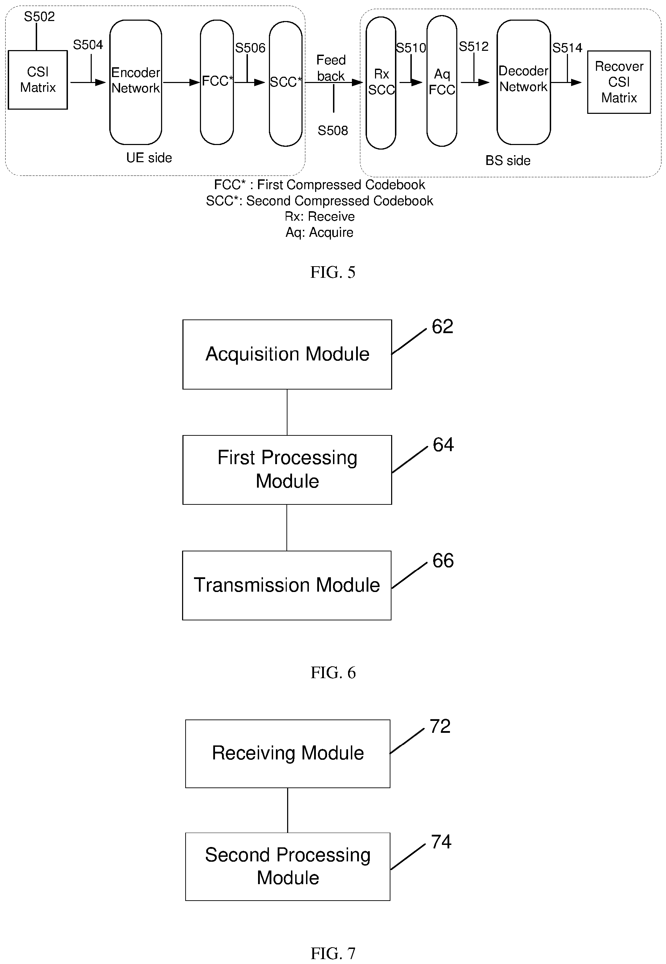

FIG. 5 depicts a schematic diagram #2 showing a procedure of feedback of a CSI matrix according to an embodiment of the present disclosure. The procedure includes the following operations.

At S502, a CSI matrix for subsequent feedback is acquired.

At S504, the CSI matrix is input into an encoder network structure to generate a first compressed codebook corresponding to the CSI matrix, where the number of elements of the first compressed codebook is less than that of the CSI matrix.

At S506, the first compressed codebook is successively subjected to processing of, quantization, encoding and modulation to generate a second compressed codebook.

At S508, the second compressed codebook is transmitted to the base station.

At S510, the second compressed codebook is successively subject to processing of demodulation, decoding, and dequantization, to obtain the first compressed codebook.

At S512, the first compressed codebook is input into a decoder network structure corresponding to the encoder network structure.

At S514, the CSI matrix is recovered through processing by the decoder network structure.

The present disclosure provides a method for transmitting a compressed codebook which includes, acquiring a CSI matrix for subsequent feedback; inputting the CSI matrix into an encoder network structure to generate a first compressed codebook corresponding to the CSI matrix, where the number of elements of the first compressed codebook is less than that of the CSI matrix; and transmitting the first compressed codebook to a base station. That is, when the CSI matrix for subsequent feedback is obtained, the CSI matrix is input into the encoder network structure to obtain a first compressed codebook corresponding to the CSI matrix, and the first compressed codebook is transmitted to the base station. By means of the method as described above, at least the failure in balancing the performance and overhead of the CSI feedback in the related art can be addressed, and then the performance of channel state information feedback can be guaranteed at low cost.

From the description of the above embodiments, it is apparent to a person having ordinary skills in the art that the method of the above embodiments can be implemented by means of software with necessary general hardware platform, or by hardware, of course, but in many cases, the former is the better practice. Based on this understanding, the technical solution of the present disclosure can be embodied in the form of software products, which are stored in a storage medium (such as ROM/RAM, magnetic disk and optical disk) and include several instructions to cause a terminal device (which can be a mobile phone, a computer, a server or a network device, etc.) execute the methods described in various embodiments of the present disclosure.

An embodiment of the present disclosure provides a device for processing data stream, which is configured to implement the above embodiment and other embodiments, and the description provided above is not repeated here. As used below, the term "module" may be a combination of software and/or hardware that carries out a predetermined function. Although the device described in the following embodiment is preferably implemented as software, but implementation as hardware, or as a combination of software and hardware, is also possible and conceivable.

FIG. 6 depicts a schematic diagram showing a device for transmitting a compressed codebook according to an embodiment of the present disclosure. The device includes the following modules.

An acquisition module 62, which is configured to acquire a CSI matrix for subsequent feedback.

A first processing module 64, which is configured to input the CSI matrix into an encoder network structure to generate a first compressed codebook corresponding to the CSI matrix, where a number of elements of the first compressed codebook is less than that of the CSI matrix.

And a transmission module 66, which is configured to transmit the first compressed codebook to a base station.

The present disclosure provides a method for transmitting a compressed codebook which includes, acquiring a CSI matrix for subsequent feedback; inputting the CSI matrix into an encoder network structure to generate a first compressed codebook corresponding to the CSI matrix, where the number of elements of the first compressed codebook is less than that of the CSI matrix; and transmitting the first compressed codebook to a base station. That is, when the CSI matrix for subsequent feedback is obtained, the CSI matrix is input into the encoder network structure to obtain a first compressed codebook corresponding to the CSI matrix, and the first compressed codebook is transmitted to the base station. By means of the method as described above, at least the failure in balancing the performance and overhead of the CSI feedback in the related art can be addressed, and then the performance of channel state information feedback can be guaranteed at a low cost.

In an embodiment, the transmission module 66 is further configured to, successively quantize, encode, and modulate the first compressed codebook to generate a second compressed codebook; and transmit the second compressed codebook to the base station.

In an embodiment, the transmission module 66 is further configured to acquire the currently employed encoder network structure from a plurality of encoder network structures according to at least one of, a channel type indication that is indicative of the currently employed encoder network structure, a component type of the compressed codebook, or the number of components of the compressed codebook.

It should be noted that at the UE side, the encoder network structure can be an encoder in an AutoEncoder (AE). The encoder network structure can be a Fully-Connected Network (FCN) structure, in which the network layers in the fully-connected network structure are all fully-connected layers. Alternatively, the encoder network structure can also be a Convolutional Neural Network (CNN) structure, in which the network layers in the convolutional neural network structure are all convolution layers. Alternatively, the encoder network structure can be a Recurrent Neural Network (RNN) structure, in which the network layers in the recurrent neural network structure are all fully connected layers. Alternatively, the encoder network structure can be a Residual Network (ResNet) structure, in which the network layer of the ResNet structure is a residual block structure. Alternatively, the encoder network structure can be a hybrid network structure, in which the network layers in the hybrid network structure can be a combination of a fully-connected layer, a convolution layer, a pooling layer, a recurrent layer, batch normalization layer, residual network block and the like.

In an embodiment, the currently employed encoder network structure can be acquired from a plurality of encoder network structures according to at least one of, a channel type indication that is indicative of the currently employed encoder network structure, a component type of the compressed codebook, or the number of components of the compressed codebook.

In an embodiment, the network parameters of the encoder network structure include at least one of, a network layer type, a network layer number, a network layer mapping, a network layer weight, a network layer bias, a network layer weight normalization coefficient, a network layer activation function, or a compression ratio, where the compression ratio is indicative of the ratio of the number of elements of the first compressed codebook to the number of elements of the CSI matrix.

It should be noted that the network parameters of the encoder network structure include at least one of, a network layer type, a network layer number, a network layer mapping, a network layer weight, a network layer bias, a network layer weight normalization coefficient, a network layer activation function, or a compression ratio.

The encoder network structure includes L1 network layers, and the i-th network layer can be a fully connected layer, a convolution layer, a pooling layer, a recurrent layer, a batch normalization layer or a residual network block composed of several convolution layers. In particular, the i-th network layer contains $N_{e,i}$ nodes (the network weight corresponding to this layer is $W_{e,i}$, and if a convolution layer is included, the network convolution kernel weight of this layer can also be $K_{e,i}$), 0-1 network layer bias $b_{e,i}$, and activation function $A_{e,i}$ (i=1, ..., L1). In an embodiment, the activation function can be a ReLU function, as shown in equation (1):

$$y = max(x, 0) \ (1).$$

In another embodiment, the activation function can also be a Leaky ReLU function, as shown in equation (2):

$$y = \begin{cases} x & x \geq 0 \\ ax & x < 0 \end{cases} \quad a > 0 \ (2)$$

In yet another embodiment, the activation function can also be an ELU function, as shown in equation (3):

$$y = \begin{cases} x & x > 0 \\ a(e^x - 1) & x \leq 0 \end{cases} \quad a > 0 \ (3).$$

In yet another embodiment, the activation function can also be the Sigmoid function, as shown in equation (4):

$$y = \frac{1}{1+e^{-x}} \ (4).$$

The activation function can also be a Tanh function, as shown in equation (5):

$$y = \frac{1-e^{-2x}}{1+e^{-2x}} \ (5).$$

However, the activation function is not limited to the functions listed above. In the L1$^{th}$ network layer of the encoder network structure, the network output is a compressed codebook including P elements. In an embodiment, the number of elements in the compressed codebook is different from the number of elements M of the input CSI matrix. Typically, the number of elements in the compressed codebook is less than the number of elements corresponding to the CSI matrix, that is, P < M. The ratio of the number of elements in the compressed codebook to the number of elements in the CSI matrix is called the Compression Ratio (CR), as shown in equation (6).

$$CR = P/M \ (6).$$

For example, the CSI matrix contains 2048 elements, while the compressed codebook contains only 32 elements, so the compression ratio is 32/2048=1/64. The parameters described in this embodiment all belong to the network parameters of this encoder network, and the feedback overhead of the UE side can be further controlled by changing the compression ratio.

In an embodiment, the transmission module 66 is further configured to receive a plurality of sets of network parameters of encoder network structures sent through high-layer signaling or physical layer signaling by the base station, and acquire a set of network parameters from the plurality sets of network parameters of encoder network structures according to a channel condition, where the channel condition includes at least one of, a channel scenario, or a channel feature.

It should be noted that, in the present disclosure, a plurality sets of network parameters of encoder network structures sent by the base station are received through high-level signaling or physical layer signaling. Then a set of network parameters is acquired from the plurality sets of network parameters of encoder network structures according to the channel condition that can be a channel scenario, or a channel feature.

In an embodiment, the transmission module 66 is further configured to transmit the acquired set of network parameters to the base station, to instruct the base station to process the first compressed codebook according to a decoder network structure corresponding to the set of network parameters to acquire the CSI matrix.

It should be noted that after a set of network parameters is acquired from the plurality sets of network parameters of encoder network structures according to the channel conditions, the obtained set of network parameters is transmitted to the base station. The base station obtains the corresponding decoder network structure according to the set of network parameters, and processes the first compressed codebook through the obtained decoder network structure to obtain the CSI matrix.

In an embodiment, the encoder network structure includes at least one of, a fully connected network structure, a convolutional neural network structure, a recurrent neural network structure, or a residual network structure.

It shall be noted that, the encoder network structure can be, an encoder in an AutoEncoder, a fully connected network structure, a convolutional neural network structure, a recurrent neural network structure, or a residual network structure. The encoder network structure can also be a hybrid network structure.

FIG. 7 depicts a schematic diagram showing a device for acquiring a CSI matrix according to an embodiment of the present disclosure. The device includes the following modules.

A receiving module 72, which is configured to receive a first compressed codebook or a second compressed codebook transmitted by a terminal device, where the first compressed codebook is generated by inputting a CSI matrix into an encoder network structure by the terminal device, and the second compressed codebook is generated by a preset processing to the first compressed codebook, and the number of elements of the first compressed codebook is less than that of the CSI matrix;

A second processing module 74, which is configured to input the first compressed codebook or the second compressed codebook into a decoder network structure corresponding to the encoder network structure to obtain the CSI matrix.

An embodiment of the present disclosure provides a method for acquiring a CSI matrix, the method includes, receiving a first compressed codebook or a second compressed codebook transmitted by a terminal device, where the first compressed codebook is generated by inputting a CSI matrix into an encoder network structure by the terminal device, the second compressed codebook is generated by preset processing to the first compressed codebook, and the number of elements of the first compressed codebook is less than that of the CSI matrix; and inputting the first compressed codebook or the second compressed codebook into a decoder network structure corresponding to the encoder network structure to obtain the CSI matrix. That is, when the first compressed codebook or the second compressed codebook transmitted by the terminal device is received, the first compressed codebook or the second compressed codebook is input into the decoder network structure corresponding to the encoder network structure to obtain the CSI matrix. By means of the method as described above, at least the failure in balancing the performance and overhead of the CSI feedback in the related art can be addressed, and then the performance of channel state information feedback can be guaranteed at a low cost.

It should be noted that the terminal device is the User Equipment (UE) side.

In an embodiment, the second compressed codebook is generated by sequentially quantizing, encoding and modulating the first compressed codebook.

In an embodiment, the second processing module 74 is further configured to successively demodulate, decode and dequantize the second compressed codebook, in response to a reception of the second compressed codebook transmitted by the terminal device, to obtain the first compressed codebook.

In an embodiment, the network parameters of the decoder network structure include at least one of, a network layer type, a network layer number, a network layer mapping, a network layer weight, a network layer bias, a network layer weight normalization coefficient, a network layer activation function, or a compression ratio, where the compression ratio is indicative of the ratio of the number of elements of the first compressed codebook to the number of elements of the CSI matrix.

It should be noted that the network parameters of the decoder network structure can be, a network layer type, a network layer number, a network layer mapping, a network layer weight, a network layer bias, a network layer weight normalization coefficient, a network layer activation function, or a compression ratio.

The decoder network structure includes L2 network layers. Since the network structure at the base station side is complex, the number of layers of the decoder network L2 is greater than that of the layers of the encoder network, that is $L2 \geq L1$. The i-th network layer can be a fully connected layer, a convolution layer, a pooling layer, a recurrent layer, a batch normalization layer or a residual network block composed of several convolution layers. In particular, the i-th network layer contains $N_{d,i}$ nodes (the network weight corresponding to this layer is $W_{d,i}$, and if a convolution layer is included, the network convolution kernel weight of this layer can also be $K_{d,i}$), 0-1 network layer bias $b_{d,i}$, and activation function $A_{d,i}$ (i=1, ..., L2). The activation function can be ReLU function, Leaky ReLU function, ELU function, Sigmoid function or Tanh function, but the activation function is not limited thereto. In the $L2^{th}$ network layer of the decoder network structure, the network output is a CSI matrix including M elements. The parameters described in this embodiment are all network parameters of the decoder network.

In an embodiment, the second processing module 74 is further configured to, transmit a plurality of sets of network parameters of encoder network structures to the terminal device through high-layer signaling or physical layer signaling, to instruct the terminal device acquire a set of network parameters from the plurality sets of network parameters of encoder network structures according to a channel condition, where the channel condition includes at least one of, a channel scenario, or a channel feature.

It should be note that, in the present disclosure, a plurality sets of network parameters of encoder network structures are sent to the terminal device through high-level signaling or physical layer signaling. Then a set of network parameters is acquired by the terminal device from the plurality sets of network parameters of encoder network structures according to the channel condition that can be a channel scenario, or a channel feature.

In one embodiment, the second processing module 74 is further configured to, receive the acquired set of network parameters sent by the terminal device; and process the first compressed codebook or the second compressed codebook according to a decoder network structure corresponding to the set of network parameters to acquire the CSI matrix.

It should be noted that the terminal device inputs the CSI matrix into the encoder network, the input CSI matrix is processed according to the structural parameters in the encoder network, then a compressed codebook is output and fed back to the base station. In an embodiment, the second compressed codebook that is generated by successively quantizing, encoding and modulating the compressed codebook can also be transmitted to the base station. The quantization can be uniform quantization or non-uniform quantization. The base station side receives the compressed codebook fed back by the terminal device and inputs the compressed codebook into the decoder network. The input compressed codebook is processed according to the structural parameters in the decoder network. Then the recovered CSI matrix is output. In an embodiment, the base station side receives the second compressed codebook fed back by the terminal device, successively dequantizes, decodes and demodulates the second compressed codebook, and inputs the processed second compressed codebook into the decoder network. The input second compressed codebook is processed according to the structural parameters in the decoder network. Then the recovered CSI matrix is output.

In an embodiment, the decoder network structure includes at least one of, a fully connected network structure, a convolutional neural network structure, a recurrent neural network structure, or a residual network structure.

It should be noted that at the base station side, the decoder network structure can be a decoder in an AutoEncoder (AE). The decoder network structure can be an FCN structure, in which the network layers are all fully-connected layers. Alternatively, the decoder network structure can also be a CNN structure, in which the network layers are all convolution layers. Alternatively, the decoder network structure can be a RNN structure, in which the network layers are all fully connected layers. Alternatively, the decoder network structure can be a ResNet structure, in which the network layer is a residual block structure. Alternatively, the decoder network structure can be a hybrid network structure, in which the network layers can be a combination of a fully-connected layer, a convolution layer, a pooling layer, a recurrent layer, a residual network block and the like.

It should be noted that in order to obtain the compressed codebook from the input CSI matrix at the UE side, and receive the compressed codebook and recover the compressed codebook to the CSI matrix at the base station side, it is necessary to establish an encoder network at the UE side and a decoder network at the base station side. The parameters of the encoder network and the decoder network can be trained off-line, or can be obtained by off-line training and fine-tuning the parameters in the online stage. A plurality of sets of network parameters jointly trained by the terminal device and the base station are stored, where each set of parameters of encoder network has corresponding parameters of decoder network. The base station can configure $X$ ($X \geq 1$) sets of parameters of encoder network according to high-level signaling, and send the X sets of parameters of encoder network to the UE through high-level signaling or physical layer signaling. The UE selects one suitable set of parameters of encoder network according to at least one factor such as the practical channel scenario and channel features, and then feeds back the index of the selected network parameters to the base station through physical layer or high-level signaling, and processes the input CSI matrix with the selected parameters of encoder network to generate a compressed codebook. The base station side obtains the corresponding trained parameters of decoder network according to the index of parameters of encoder network fed back by the UE, and processes the compressed codebook received by the base station to obtain the CSI matrix.

An embodiment of the present disclosure further provides a computer-readable storage medium storing a computer program, which when executed by a processor, causes the processor to carry out the method in any of the above embodiments.

Alternatively, in this embodiment, the above storage medium is configured to store a computer program for performing the following operations.

At S1, a CSI matrix for subsequent feedback is acquired.

At S2, the CSI matrix is input into an encoder network structure to generate a first compressed codebook corresponding to the CSI matrix, where the number of elements of the first compressed codebook is less than that of the CSI matrix.

At S3, the first compressed codebook is transmitted to a base station.

In an embodiment, the computer-readable storage medium may include, but is not limited to, U disk, Read-Only Memory (ROM), Random Access Memory (RAM), portable hard disk, magnetic disk or optical disk, or other media that can store computer programs.

The specific examples in this embodiment, can be referred to the examples described in the above embodiments, and which will not be repeated here.

An embodiment of the present disclosure further provides an electronic apparatus, which includes a processor and a memory storing a computer program, which when executed by the processor, causes the processor to carry out the method in any of the above embodiments.

In some implementations of this embodiment, the above processor is configured to perform the following operations by computer programs.

At S1, a CSI matrix for subsequent feed back is acquired.

At S2, the CSI matrix is input into an encoder network structure to generate a first compressed codebook corresponding to the CSI matrix, where the number of elements of the first compressed codebook is less than that of the CSI matrix.

At S3, the first compressed codebook is transmitted to a base station.

In an embodiment, the electronic apparatus may further include a transmission device and an input-output (I/O) device, in which the transmission device is connected with the processor, and the input-output device is connected with the processor.

The specific examples in this embodiment, can be referred to the examples described in the above embodiments, and which will not be repeated here.

The present disclosure provides a method for transmitting a compressed codebook which includes, acquiring a CSI matrix for subsequent feedback; inputting the CSI matrix into an encoder network structure to generate a first compressed codebook corresponding to the CSI matrix, where the number of elements of the first compressed codebook is less than that of the CSI matrix; and transmitting the first compressed codebook to a base station. That is, when the CSI matrix for subsequent feedback is obtained, the CSI matrix is input into the encoder network structure to obtain a first compressed codebook corresponding to the CSI matrix, and the first compressed codebook is transmitted to the base station. By means of the method as described above, at least the failure in balancing the performance and overhead of the CSI feedback in the related art can be addressed, and then the performance of channel state information feedback can be guaranteed at a low cost.

It shall be apparent to those having ordinary skill in the art that the above modules or processes of the present disclosure can be implemented as a general-purpose computing device, which may be distributed integratedly over a single computing device or distributed over a network composed of a plurality of computing devices, and which may be implemented as program codes executable by the computing device(s), thus which can be stored in a storage device and executed by the computing device(s). In some cases, the processes shown or described may be performed in an order different than those shown or described. Alternatively, all or some of the processes may be embodied separately into individual integrated circuit modules. Therefore, the present disclosure is not limited to any specific combination of hardware and software.

While some embodiments of the present disclosure are described above, the present disclosure is not limited by those embodiments described. Various modifications and alternations can be made by those having ordinary skill in the art. Any modifications, equivalents, alternations, or improvements, made within the concepts of the present disclosure shall be included in the scope of protection of the present disclosure.

**Claims**

1. A method for transmitting a compressed codebook, comprising,

   acquiring a channel state information (CSI) matrix for subsequent feedback;
   inputting the CSI matrix into an encoder network structure to acquire a first compressed codebook corresponding to the CSI matrix, wherein a number of elements of the first compressed codebook is less than a number of elements of the CSI matrix; and
   transmitting the first compressed codebook to a base station.

2. The method as claimed in claim 1, wherein transmitting the first compressed codebook to the base station comprises,

   successively quantizing, encoding, and modulating the first compressed codebook to generate a second compressed codebook; and
   transmitting the second compressed codebook to the base station.

3. The method as claimed in claim 1, wherein, the encoder network structure comprises at least one network parameter each comprising at least one of, a network layer type, a network layer number, a network layer mapping, a network layer weight, a network layer bias, a network layer weight normalization coefficient, a network layer activation function, or a compression ratio, wherein the compression ratio is indicative of a ratio of the number of elements of the first compressed codebook to the number of elements of the CSI matrix.

**4.** The method as claimed in claim 1, wherein before inputting the channel state information matrix into the encoder network structure to acquire the first compressed codebook corresponding to the CSI matrix, the method further comprises:

> receiving a plurality sets of network parameters of encoder network structures sent by a base station through high-layer signaling or physical layer signaling; and
> acquiring a set of network parameters from the plurality sets of network parameters of encoder network structures according to a channel condition, wherein the channel condition comprises at least one of a channel scenario, or a channel feature.

**5.** The method as claimed in claim 4, wherein after acquiring the set of network parameters from the plurality of network parameters of encoder network structures according to the channel condition, the method further comprises,
transmitting the acquired set of network parameters to the base station, to instruct the base station to process the first compressed codebook according to a decoder network structure corresponding to the set of network parameters to acquire the CSI matrix.

**6.** The method as claimed in any one of claim 1 to claim 5, wherein the encoder network structure comprises at least one of, a fully connected network structure, a convolution neural network structure, a recurrent neural network structure, or a residual network structure.

**7.** A method for acquiring a channel state information (CSI) matrix, comprising,

> receiving a first compressed codebook or a second compressed codebook transmitted by a terminal device, wherein the first compressed codebook is generated by an encoder network structure into which the CSI matrix is input by the terminal device, the second compressed codebook is generated by a preset processing to the first compressed codebook, and a number of elements of the first compressed codebook is less than a number of elements of the CSI matrix; and
> inputting the first compressed codebook or the second compressed codebook into a decoder network structure corresponding to the encoder network structure to generate the CSI matrix.

**8.** The method as claimed in claim 7, wherein, the second compressed codebook is generated by sequentially quantizing, encoding and modulating the first compressed codebook.

**9.** The method as claimed in claim 7, further comprising,
successively demodulating, decoding, and dequantizing the second compressed codebook, in response to a reception of the second compressed codebook transmitted by the terminal device, to obtain the first compressed codebook.

**10.** The method as claimed in claim 7, wherein, the decoder network structure comprises at least one network parameter each comprising at least one of, a network layer type, a network layer number, a network layer mapping, a network layer weight, a network layer bias, a network layer weight normalization coefficient, a network layer activation function, or a compression ratio, wherein the compression ratio is indicative of a ratio of the number of elements of the first compressed codebook to the number of elements of the CSI matrix.

**11.** The method as claimed in claim 7, further comprising,
transmitting a plurality of sets of network parameters of encoder network structures to the terminal device through high-layer signaling or physical layer signaling, to instruct the terminal device to acquire a set of network parameters from the plurality sets of network parameters of encoder network structures according to a channel condition, wherein the channel condition comprises at least one of, a channel scenario, or a channel feature.

**12.** The method as claimed in claim 11, further comprising,

> receiving the acquired set of network parameters of encoder network structure sent by the terminal device; and
> processing the first compressed codebook or the second compressed codebook according to the decode network structure corresponding to the set of network parameters to acquire the CSI matrix.

**13.** The method as claimed in any one of claim 7 to claim 12, wherein the decoder network structure comprises at least one of, a fully connected network structure, a convolutional neural network structure, a recurrent neural network structure, or a residual network structure.

**14.** A device for transmitting a compressed codebook, comprising,

> an acquisition module, which is configured to acquire a channel state information (CSI) matrix for subsequent feedback;
> a first processing module, which is configured to input the CSI matrix into an encoder network structure to generate a first compressed codebook corresponding to the CSI matrix, wherein a number of elements of the first compressed codebook is less than a number of elements of the CSI matrix; and

a transmission module, which is configured to transmit the first compressed codebook to a base station.

15. A device for acquiring a channel state information (CSI) matrix, comprising,

a receiving module, which is configured to receive a first compressed codebook or a second compressed codebook transmitted by a terminal device, wherein the first compressed codebook is generated by an encoder network structure into which the CSI matrix is input by the terminal device, the second compressed codebook is generated by a preset processing to the first compressed codebook, and a number of elements of the first compressed codebook is less than a number of elements of the CSI matrix; and

a second processing module, which is configured to input the first compressed codebook or the second compressed codebook into a decoder network structure corresponding to the encoder network structure to obtain the CSI matrix.

16. A computer-readable medium storing thereon a computer program which, when executed by a processor, causes the processor to carry out the method as claimed in any one of claims 1 to 6, or the method as claimed in any one of claims 7 to 13.

17. An electronic apparatus, comprising a processor and a memory storing a computer program, which when executed by the processor, causes the processor to carry out the method as claimed in any one of claims 1 to 6, or the method as claimed in any one of claims 7 to 13.

I/O device 108

Transmission Device 106

Processor 102

Memory 104

FIG. 1

Acquire a channel state information (CSI) matrix for subsequent feedback — S202

Input the CSI matrix into an encoder network structure to generate a first compressed codebook corresponding to the CSI matrix, where the number of elements of the first compressed codebook is less than that of the CSI matrix — S204

Transmit the first compressed codebook to a base station — S206

FIG. 2

Receive a first compressed codebook or a second compressed codebook transmitted by a terminal device, where the first compressed codebook is generated by a CSI matrix inputted into an encoder network structure by the terminal device, and the second compressed codebook is generated by a preset processing to the first compressed codebook, and the number of elements of the first compressed codebook is less than that of the CSI matrix ~S302

Input the first compressed codebook or the second compressed codebook into a decoder network structure corresponding to the encoder network structure to generate the CSI matrix ~S304

FIG. 3

S402

S404

CSI Matrix → Encoder Network → FCC* — Feed back → Rx FCC → Decoder Network → Recover CSI Matrix

S406    S408    S410

UE side    BS side

FCC* : First Compressed Codebook
Rx: Receive

FIG. 4

FCC* : First Compressed Codebook
SCC*: Second Compressed Codebook
Rx: Receive
Aq: Acquire

FIG. 5

FIG. 6

FIG. 7

## INTERNATIONAL SEARCH REPORT

| | International application No. |
|---|---|
| | **PCT/CN2021/137198** |

| | | |
|---|---|---|
| **A.** | **CLASSIFICATION OF SUBJECT MATTER** | |
| | H04B 7/0417(2017.01)i | |
| | | |
| According to International Patent Classification (IPC) or to both national classification and IPC | | |

| | |
|---|---|
| **B.** | **FIELDS SEARCHED** |

| |
|---|
| Minimum documentation searched (classification system followed by classification symbols) |
| H04B; H04W |

| |
|---|
| Documentation searched other than minimum documentation to the extent that such documents are included in the fields searched |
| |

| |
|---|
| Electronic data base consulted during the international search (name of data base and, where practicable, search terms used) |
| CNTXT; CNKI; WPABSC; ENTXTC; 3GPP: 压缩, 信道状态信息, 编码, 译码, 码本, 码字, 反馈, 矩阵, 元素, 个数, 数量, 小于, 大于, 维度, 量化, 调制, CSI, code, decode, codeword, codebook, feedback, matrix, dimension, quantify, modulate |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 110350958 A (SOUTHEAST UNIVERSITY) 18 October 2019 (2019-10-18) description, paragraphs 4-30 | 1-17 |
| A | CN 109525292 A (SOUTHEAST UNIVERSITY) 26 March 2019 (2019-03-26) entire document | 1-17 |
| A | CN 109474316 A (SOUTHEAST UNIVERSITY) 15 March 2019 (2019-03-15) entire document | 1-17 |
| A | US 2020052746 A1 (AT & T INTELLECTUAL PROPERTY I, L.P.) 13 February 2020 (2020-02-13) entire document | 1-17 |

| | |
|---|---|
| ☐ Further documents are listed in the continuation of Box C. | ☑ See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 January 2022** | **17 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/137198** |

| Patent document cited in search report | | | Publication date (day/month/year) | Patent family member(s) | | | Publication date (day/month/year) |
| --- | --- | --- | --- | --- | --- | --- | --- |
| CN | 110350958 | A | 18 October 2019 | None | | | |
| CN | 109525292 | A | 26 March 2019 | None | | | |
| CN | 109474316 | A | 15 March 2019 | None | | | |
| US | 2020052746 | A1 | 13 February 2020 | US | 10826578 | B2 | 03 November 2020 |
| | | | | US | 10461821 | B1 | 29 October 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110321069